# EUROPEAN PATENT APPLICATION

(11) **EP 1 183 938 A1**
(43) Date of publication of application: **06.03.2002**
(21) Application number: 01610088.5
(22) Date of filing: 22.08.2001
(51) Int. Cl.: A01D 57/00

(54) **A mower**

(30) Priority: 22.08.2000 DK 200001240
(71) Applicant: JF-FABRIKEN - J. FREUDENDAHL A/S, DK-6400 Sonderborg (DK)
(72) Inventor: Jorgensen, Martin Raadkjaer, 6400 Sonderborg (DK); Freudendahl, Jorn, 6400 Sonderborg (DK)
(74) Representative: Jorgensen, Bjorn Barker

(57) **Abstract**

The mower comprises cutting means (4) rotating about upwards directed axes (6) arranged in a row and defining a working width (w), when the mower (1) during operation is advanced in a travelling direction (11), and a shield mounted across the cutting means (4), said shield comprising a fixed member (7) and a flexible member (9) hanging down from the fixed member. Ahead of the cutting means (4) and the fixed member (7) of the shield, across at least a part of the operation width, a means (12) is provided, said means circulating about an axis (14) transverse relative to the travelling direction (11) for laying down the crop (15), at least partially, before it is reached by the cutting means (4).

## Description

The present invention relates to a mower comprising cutting means rotating about upwards directed axes arranged in a row and defining a working width when the mower during operation is advanced in a travelling direction, and a shield mounted above the cutting means, said shield comprising a fixed member and a flexible member hanging down from the fixed member.

An example of a mower of this kind is disclosed in EP-A-0 628 237, in which the fixed member in the form of a flap is adapted to be swung from a substantially horizontal operating position upwards to a substantially vertical position to reduce the transport width of the mower. The fixed member has during operation a fixed position, whereas a skirt hanging down from the fixed member is flexible to be bent in under the fixed member and to allow crop to be harvested to pass under the mower. The position of the shield, and in particular the position of the fixed member, is determined in consideration of the approval of the authorities, as such mowers, in order to obtain a type approval have to be tested to ensure that for instance stones cannot be thrown forwards and hit the tractor driver.

When harvesting tall crops (the crops may be more than 1.5 m) the problem may arise that the crop, when hit by the shield of the mower, which may for instance be positioned at a height of 0.5 m, is laid down over the mower and its shield. This may entail the risk that a heaping up of crop takes place at the front end of the mower, the result being that the relative flow of crop under the mower gets very uneven and the mower may get blocked.

A known solution to this problem is to provide a shield which is movable in such a way that it may be moved upwards and forwards. Thereby a bigger free height is obtained under the shield simultaneously with the maintenance of its security function. Drawbacks of this solution are, however, that the construction gets more complicated, and the mower gets bulkier, which may present problems during transport.

Another known solution is to swing the shield upwards to get it out of the way. This solution is of course unacceptable, as safety against stones thrown from the mower is thereby considerably reduced.

The object of the invention is to provide a solution to the above problem, in which it is not necessary to remove the shield.

The object is met in that ahead of the cutting means and the fixed member of the shield across at least a part of the operation width a means is provided, said means circulating about an axis transverse relative to the travelling direction for laying down the crop, at least partially, before it is reached by the cutting means. Hereby is attained that at least a part of the crop is bent forwards in critical places, where the means is placed, before it is reached by the cutting means and before it moves in under the fixed member of the shield. Crop which is laid down over the circulating means will be passed forwards by the means.

The under side of the means extends during operation substantially on a level with a free height under the fixed member of the shield and frame parts of the mower, under which the crop is to pass, or lower. Hereby is ensured that the crop will be put down at least to a height corresponding to the free height for passage through the mower.

In an embodiment the means comprises a body rotatable about an axis, for instance a cylindrical drum, the axis being preferably substantially horizontal. Alternatively, a belt (a caterpillar) running about several rollers, a cone-shaped body, a wheel, a cylinder with an open cylinder casing, for instance formed by parallel rods, etc. may be used.

The means may be freely circulating to be driven around through contact with the crop.

Alternatively, the means may be driven.

The means may during operation be kept at a specific height.

Alternatively, the means may suspended in such a manner that it can be moved upwards and downwards during operation, such that the means rests on the crop with at least a part of its weight.

US-A-2 333 153 discloses a grain harvester having a cutter bar with shear cutters and a pick-up reel mounted above the cutter bar. There is no safety shield, but the shear cutter is on the other hand not likely to throw stones. Big and tall weed plants may get entangled in the pick-up reel and present problems. Therefore, a thin roller has been placed in front of the pick-up reel, said roller keeping these tall weed plants away from the pick-up reel.

Furthermore, US-A-3 092 946 discloses a mower with a horizontal rotary cutter with swingles. A cover extending from somewhere ahead of the cutter and in an arch above the cutter is provided. The cover is adjustable and has to be carefully adjusted, as the frictional conditions between the cover, the crop and the cutter are vital for attaining a satisfactory functioning of the cutter. The cover shown in the publication would hardly be allowable today, as it lacks the downwards hanging flexible member. It is said in the publication that sometimes it is desirable to reduce the inlet opening, however, without stating any reason therefor. In order not to affect the sensitive frictional conditions, such a reduction takes place by arranging ahead of the cover a driven or freely running roller. It should be noted that it is in this connection a question of a cutter which, contrary to the cutting means rotating about upwards directed axis used in the mower according to the invention, is most effective in transporting the chopped material.

The invention will be described in detail in the following by means of examples of embodiments with reference to the schematic drawing, in which
Fig. 1 is a partially translucent lateral view of a disc mower according to the invention,
Fig. 2 is a plan view of the mower in Fig. 1,
Fig. 3 is a plan view corresponding to Fig. 2, but showing a variant of the embodiment of the invention,
Fig. 4 is a plan view corresponding to Figs 2 and 3, but illustrating two further variants, and
Fig. 7 is a lateral view corresponding to Fig. 1 showing yet another variant.

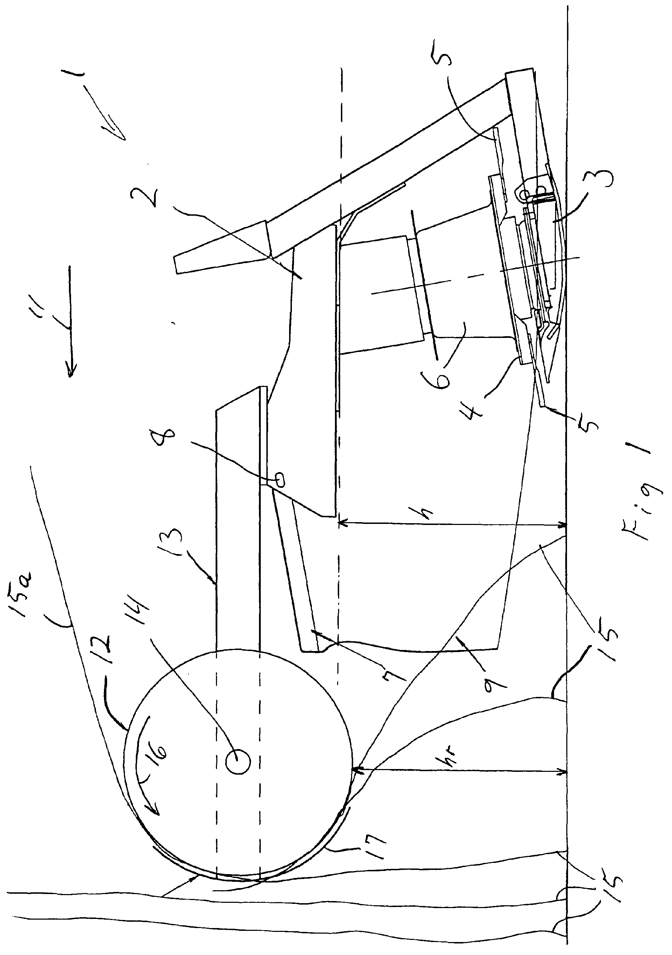

Fig. 1 shows a mower 1 with a chassis frame 2 carrying a cutter bar 3 having a number of cutter discs 4, of which only the closest one is to be seen. The cutter discs 4 are provided with knives 5 pivotally mounted at the periphery, said discs 4 being during operation driven to rotate about each respective upwards directed axis 6.

To the chassis frame 2 a shielding plate 7 is hinged, said plate constituting a fixed member of a shield and being swingable upwards around a hinge pin 8 to provide access to the cutter discs 4, for instance for replacement of knives 5. A flexible shield in the form of a protection cloth 9 is hanging down from the shield plate 7. During operation, the shield plate 7 takes up permanently the position shown. Below the shielding plate 7 and the chassis frame 2 is a free height h from the surface of the field for passage of crop.

In so far as it has been described up till now, the construction of the mower 1 is completely common. The mower may thus in addition to the members shown comprise a conditioning device and a throwing device, which may be one and the same member, as well as guiding shields for crop thrown from the throwing device. The mower may be adapted for suspension in the three-point suspension of a tractor as a lift-suspended machine or it may be suspended in a frame with driving wheels and a draw bar for being towed behind a tractor.

In the example shown (see Fig. 2) the cutter discs 4 are constructed as four pairs, in which the two cutter discs 4 of each pair are contrarotating in order to cut crop in a working width w and guide it backwards in between them as indicated by arrows 10, when the mower 1 during operation is advanced in its travelling direction 11.

Instead of the comparatively small cutter discs 4 shown with power transmission through the cutter bar 3, the mower 1 might be equipped with bigger cutter discs mounted under so-called drums with overhead shaft and thus being constructed as a drum mower.

As something new according to the invention the mower 1 is provided with a drum-shaped rotor 12 suspended in arms 13, which in the case shown are fastened to the chassis frame 2. The rotor 12 is rotatable about a shaft 14.

When harvesting tall stem-shaped crop 15 (only a few scattered stems are shown by way of example), there may be a risk that the crop adheres to the shielding plate 7, to the chassis frame 2, to other frame parts or in the transitions therebetween. By the rotor 12 is obtained that the crop 15 is put down to such a height that the problem of adhering crop is avoided. The rotor mainly rolls over the crop, whereby parts 15a of the crop, which, when hit by the mower, lie down over it, get passed forwards by the rotation (arrow 16) of the rotor 12 and laid out in such a manner that the mower 1 can pass it without any problems and cut it with the cutters 5.

From Fig. 2 it appears how a number of rotors 12 is placed side by side to rotate about a common axis. To prevent crop from penetrating between the rotors 12 and getting stuck, small shielding plates 17 may, as indicated in Fig. 1, be mounted in front of the slits between the rotors 12.

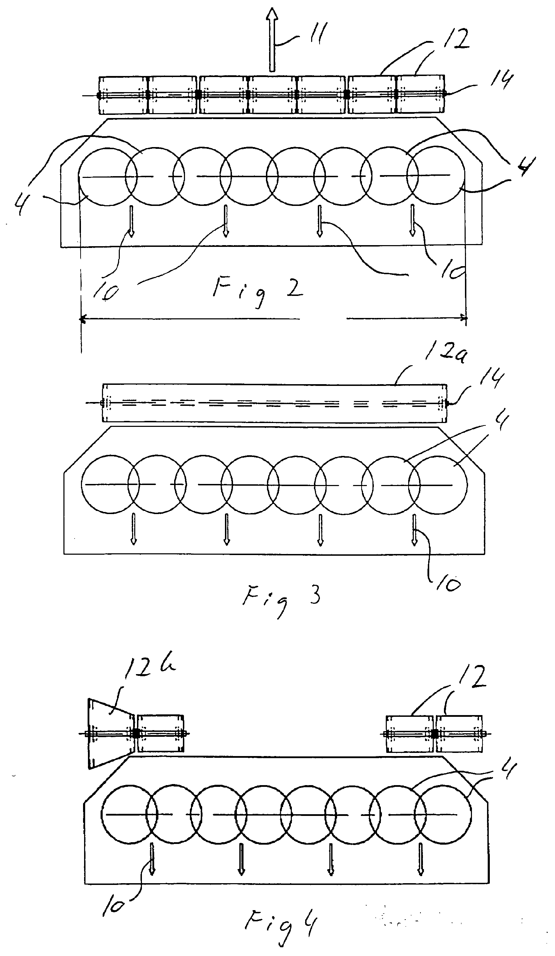

Fig. 3 shows a variant, in which instead of several small rotors 12 a long rotor 12a has been used.

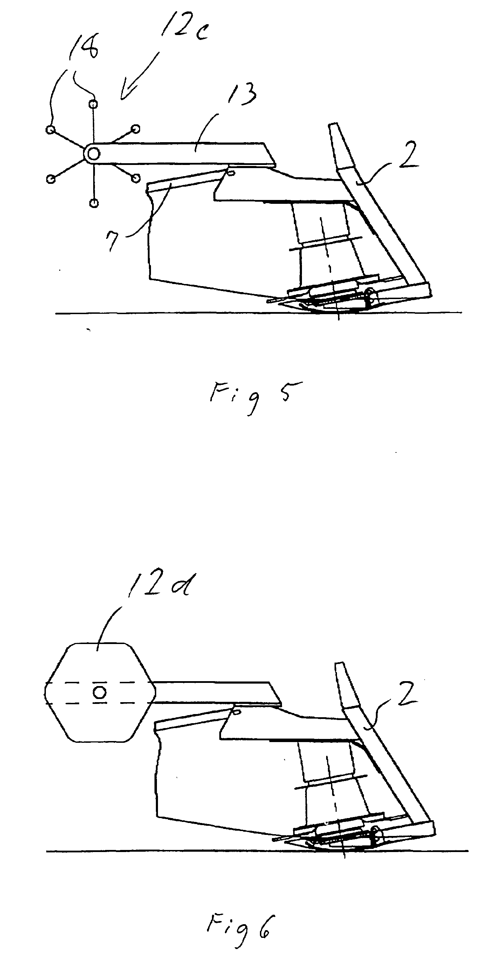

As shown in Fig. 4 it is possible to make do with placing rotors at the most critical points of the working width w, for instance at the sides. As will be seen, also conical rotors 12b may be used.

Figs 5 and 6 show other possible cross sections of the rotors than circular ones. Thus, Fig. 5 shows a rotor 12c which consists of a number of parallel rods 18 mounted on an imaginary cylinder surface, whereas Fig. 6 shows a rotor 12d with a hexagonal cross-section.

The rotor or the rotors 12 may be freely rotatable in such a manner that they are driven around by the friction with the crop. It is also possible to drive the rotors, preferably at a speed corresponding to the travelling speed of the mower in such a manner that at least a certain degree of rolling of the rotor over the crop, with which it gets in contact, is obtained.

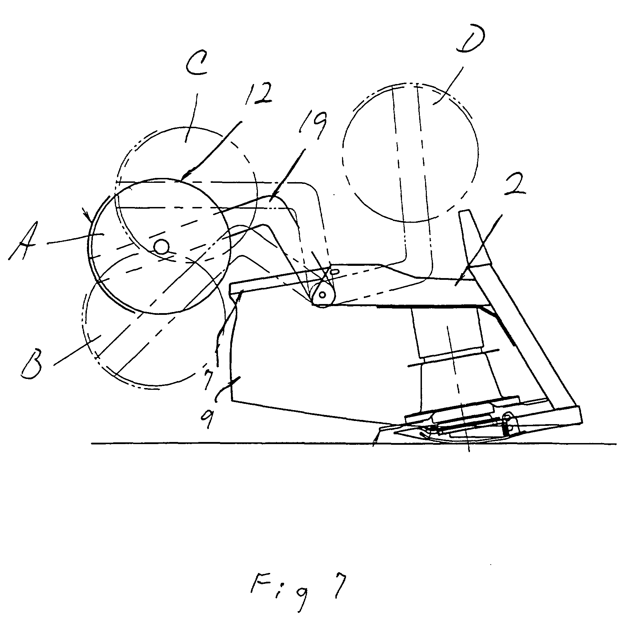

The rotor 12 shown in Fig. 1 is mounted in a fixed height hr over the field, in which hr is preferably slightly smaller, for instance approximately 5 cm, than the free height h. Fig. 7 shows a rotor mounted by means of pivot arms 19 in such a manner that by influence of its own weight it is movable upwards and downwards during operation between a position A shown with a fully drawn line, said position corresponding to the fixed position shown in Fig. 1, and a lower position B shown with a broken line. The rotor 12 may, moreover, be raised to an inactive position C and a position D allowing access to the mower from the front.

Many other variants may be imagined and the invention is not limited to the examples shown in the figures.

## Claims

1. A mower comprising cutting means (4) rotating about upwards directed axes (6) arranged in a row and defining a working width (w) when the mower (1) during operation is advanced in a travelling direction (11), and a shield mounted above the cutting means (4), said shield comprising a fixed member (7) and a flexible member (9) hanging down from the fixed member, **characterized in that** ahead of the cutting means (4) and the fixed member (7) of the shield across at least a part of the operation width a means (12) is provided, said means circulating about an axis (14) transverse relative to the travelling direction (11) for laying down the crop (15), at least partially, before it is reached by the cutting means (4).

2. A mower according to claim 1, **characterized in that** the under side of the means (12) extends during operation substantially on a level with a free height (h) under the fixed member (7) of the shield and frame parts (2) of the mower, under which the crop is to pass, or lower.

3. A mower according to claim 1 or 2, **characterized** in that the means (12) comprises a body (12) rotatable about the axis (14).

4. A mower according to claim 3, **characterized in that** the body is a cylindrical drum (12, 12a).

5. A mower according to claim 3 or 4, **characterized** in that the axis (14) is substantially horizontal.

6. A mower according to claims 1 - 5, **characterized** in that the means (12) is freely rotatable.

7. A mower according to claims 1 - 5, **characterized** in that the means is driven.

8. A mower according to claims 1 - 7, **characterized** in that the means (12) during operation is kept in a specific height (hr).

9. A mower according to claims 1 - 7, **characterized** in that the means (12) is suspended in such a manner that it is movable up and down during operation.
